# EUROPEAN PATENT APPLICATION

(11) **EP 3 358 519 A1**
(43) Date of publication of application: **08.08.2018**
(21) Application number: 16850761.4
(22) Date of filing: 20.06.2016
(51) Int. Cl.: G06Q 50/02, A01G 16/00

(54) **FIELD MANAGEMENT SYSTEM**

(30) Priority: 30.09.2015 JP 2015192547
(71) Applicant: Kubota Corporation, Osaka-shi, Osaka 556-8601 (JP)
(72) Inventor: ARAKI Hiroyuki, Amagasaki-shi Hyogo 661-0967 (JP); WATABE Yasushi, Amagasaki-shi Hyogo 661-0967 (JP); SAKAGUCHI Kazuo, Amagasaki-shi Hyogo 661-0967 (JP); AOTA Kazuki, Amagasaki-shi Hyogo 661-0967 (JP)
(74) Representative: Müller-Boré & Partner Patentanwälte PartG mbB
(86) International application number: PCT/JP2016/068229
(87) International publication number: WO 2017/056584

(57) **Abstract**

An agricultural field management system includes a map data recording section having a field map layer for recording field map data, a field work data recording section having a machine-type-specific field work layer for recording field work data generated for each work implemented by various kinds of farm work machine on the field, a data management section 60 for executing data management on the field map data and the field work data at a common coordinate position, and an evaluation section 70 for effecting farming evaluation of the field based on the field work data.

## Description

### TECHNICAL FIELD

This disclosure relates to an agricultural field management system configured to collect information relating to farm works via a computer network and processing such information to provide, in turn, information relating to an appropriate farm work plan.

### RELATED ART

An agricultural field management assisting system according to Patent Document 1 includes a field database for storing information relating to a location and a shape of an agricultural field on a map, a corrected growth index database for storing corrected growth index data, a work condition database for storing conditions for determining work contents based on a kind and a growth index of crops, and so on. Through use of such information stored in these databases, the system extracts information, such as a difference of growth degree distribution in a field, which forms basis for farm work determination and visually displays such information. Then, a farmer will determine a farm work to be effected within the field based on the displayed information. The databases respectively have a multi-layered structure for each year, thus allowing past performance of the field to be utilized for a next farm work.

In a farming system according to Patent Document 2, contents of farm works implemented for each farm work section such as rice planting, fertilization, harvesting, etc. are recorded together with respective costs thereof. Then, based on such performance data, a planning document of farm works to be done next is outputted. This farming system can receive data from a farm work machine working in a field and data relating fertilization such as a fertilization date, a fertilization kind (fertilizer kind), a fertilizer amount, a fertilizer cost and data relating to harvest, such as a yield, a taste, etc. are inputted as performance data. As a result, displaying of fertilization performance values of a selected field and displaying of harvest performance values such as a yield, taste value, etc. are possible.

In a work information sharing system disclosed in Patent Document 3, different farm work machines used in a same field can respectively mount a detachable recording device to be used commonly, so that information recorded by the recording devices can be shared among the respective farm work machines. In this system, a traveling speed of a combine in the course of a harvesting work and information from a GPS communication section are recorded in association with each other in the recording device. Then, based on the information recorded in this recording device, there will be formulated e.g. a work plan that causes decrease in the fertilizing amount of a fertilizing machine at a location where the traveling speed of the combine is decreased due to overgrowth of crop. Further, by making a puddling depth shorter at the time of a puddling work by a tractor, it becomes also possible to inhibit overgrowth of crop through suppression of excessive accumulation of fertilizer.

### RELATED ART DOCUMENTS

### PATENT DOCUMENTS

Patent Document 1: Japanese Unexamined Patent Application Publication No. 2007-310463
Patent Document 2: Japanese Unexamined Patent Application Publication No. 2014-194653
Patent Document 3: Japanese Unexamined Patent Application Publication No. 2014-187954

### SUMMARY

### PROBLEM TO BE SOLVED BY INVENTION

The conventional systems described above do not provide structuralization in recording of information relating to different farm works implemented in a same field. Thus, in case the amount of information to be recorded has increased, there arises the possibility of difficulty in smooth data processing. In particular, in case a plurality of kinds of farm work machines are introduced in a same field and each machine generates unique work information of its own, no system has been provided that provides simple and accurate association among such work information and makes evaluation of farming in the field based on such information.

For this reason, there is a need for a system capable of effectively recording and utilizing various kinds of work information generated by various kinds of farm work machines introduced in a same field.

### SOLUTION

An agricultural field management system according to the present invention comprises:
a map data recording section having a field map layer for recording field map data;
a field work data recording section having a machine-type-specific field work layer (a field work layer assigned for each specific machine type) for recording field work data generated for each work implemented by various kinds of farm work machine on the field;
a data management section for executing data management on the field map data and the field work data at a common coordinate position; and
an evaluation section for effecting farming evaluation of the field based on the field work data.

With the above-described arrangement, field work data of various farm work machines effecting farm works in a field are recorded in the machine-type-specific field work layer, respectively. Further, since these machine-type-specific field work data are managed at a common coordinate position to the field map data recorded in the field map layer, it is possible to read out easily and accurately field work contents of different machine types at a desired position or subdivision in the field. With use of the field work data of the respective types (kinds) of farm work machines positionally associated to each other, detailed field work management is possible when a field is divided into small subdivisions. As a result, highly accurate farming evaluation of the entire field is made possible.

With a farm work machine, its performance, fuel cost and a work period (hours) thereof may vary, depending on a traveling route taken thereby at the time of work traveling (i.e. work-involved traveling or work while traveling). Accordingly, accurate studying on a route actually taken by the farm work machine is important for farming. Thus, according to one preferred embodiment of the present invention, the field work data contains a traveling route of the farm work machine and this traveling route is associated with the coordinate position in the field map layer. With this arrangement, the traveling routes of the respective farm work machines can be studied and compared in accurate and mutual association with each other.

In the case of a dry field work, a cultivating direction of a tractor (ridge extending direction) significantly affects a water drainage plan. Also, in case the field is a rice paddy field, it is necessary to accumulate an appropriate amount of water, so a slope of the field becomes important information. For this reason, according to one preferred embodiment of the present invention, in the map data recording section, height data of the field at the coordinate position can be recorded in the field map layer; and the data management section generates slope data of the field from the height data. With this arrangement, since height data is recorded at the coordinate position of the field, the slope of the field can be obtained in all of the east, west, south and north directions. In this regard, it is difficult, thus highly costly, to obtain height data at the coordinate position of the field by a method of obtaining such height data from outside the field. However, if height of the field at each position is obtained from machine operational data (an example of "field work data") of a work implement of an agricultural work machine which travels throughout the inside of the field, obtaining such data becomes possible only through data processing substantially, thus being advantageous. For instance, it is possible to calculate the height of the field from movements of a work implement mounted to an agricultural work machine to be capable of elevating/lowering rolling control. Further, in case a height measuring instrument is attached to the farm work machine for successively obtaining height data along with traveling, the height data can be obtained at the coordinate position of the field with relatively low costs.

In the case of e.g. a crop cultivation of rice, wheat or the like, in a series of works from ground leveling of the field, seed or seedling planting, fertilizing, to crop harvest, special agricultural work machines therefor are used respectively therefor. Thus, the farm work machines employed in this agricultural field management system include basically a tractor, a rice planting or seeding machine, and a harvesting machine. With such farm work machines, depending on the machine type, their introducing timing in the field, traveling route, work contents, etc. will differ, so that useful information can be obtained individually as follows.

For instance, a tractor will be introduced at an early stage of farming for land leveling of the field, so the tractor will often travel around the outer circumference of the field while working. Thus, if an inertial navigation unit or a satellite navigation unit is mounted on the tractor, it becomes possible to obtain the contour of the field from measurement data indicating traveling route obtained at the time of traveling around/along the outer circumference of the field. Therefore, according to one preferred embodiment of the present invention, the agricultural field management system is configured such that contour data of the field may be generated based on a traveling route contained in the field work data generated by traveling of the tractor around/along the outer circumference of the field.

A rice planting machine or a seeding machine will determine a crop planting position for rice, wheat, etc. by way of its work traveling. Therefore, the field work data including the traveling route or the like of the rice planting machine or seeding machine becomes data for calculating the crop planting position. As a result, the coordinate position on the map of the crop planting position can be calculated also. Thus, according to one preferred embodiment of the present invention, the agricultural field management system is configured such that the field work data contains crop planting position data generated by a work traveling of the rice planting machine or the seeding machine; and the crop planting position data is associated with the field via the coordinate position. With this, fine and detailed farming management in the unit of crop planting position is made possible.

A harvesting machine, in association with its work traveling, reaps crop stalks and harvests grains therefrom. Then, if a crop harvest amount (yield) is determined in real-time in association with the work traveling, it becomes possible to calculate a yield associated with a traveling position, namely, a particular position in the field. With utilization of this, according to one preferred embodiment of the present invention, the agricultural field management system is configured such that the field work data includes unit traveling yield data generated in association with a traveling position in the course of a harvesting work traveling of the harvesting machine; and the unit traveling yield data is associated with the field via the coordinate position, so that a yield per subdivision of the field is calculated.

When it has been made possible to collect and record data relating to farming for each coordinate position of the field, even visualization of such data will become useful reference information for formulating a next farming work plan. And, if annually obtained data are statistically processed and visualized, the resultant information will become even more useful reference information. Then, according to one preferred embodiment of the present invention, the agricultural field management system further comprises a farm work plan calculation section for deriving farm work plan information of the field based on the farming evaluation by the evaluation section. Further, in the agricultural field management system according to the present invention, the field work data recording section includes the machine-type-specific field work layer. So, the farm work plan information noted above can be caused to include not only information of an implemented crop species, an implemented farm work timing, but also information relating to a farm work machine(s) to be introduced. As the cost relating to a farm work occupies a large proportion in the cost of the whole farm work, ability of appropriate farm work machine management will be advantageous.

### BRIEF DESCRIPTION OF THE DRAWINGS

[Fig. 1] is a diagram showing a basic configuration of an agricultural field management system,
[Fig. 2] is a functional configuration diagram of a control system mounted on a farm work machine,
[Fig. 3] is a functional block diagram of a computer system, and
[Fig. 4] is a diagram showing one example of farm work plan information.

### EMBODIMENTS

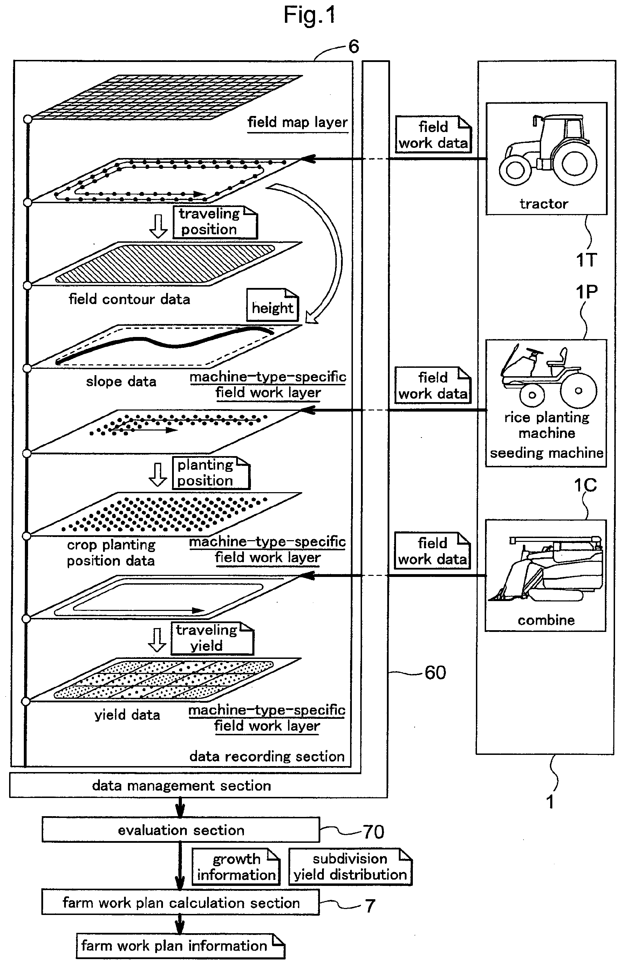

A basic configuration of an agricultural field management system according to the present invention will now be explained with reference to Fig. 1. This agricultural field management system is a computer system having a data recording section 6 having a characterizing database structure. The data recording section 6 comprises a layered structure including a map data recording section which is a field map layer recording field map data and a field work data recording section which is a machine-type-specific field work layer recording field work data generated for each work implemented on the field by various kinds of farm work machines. Incidentally, in the field map layer, there are recorded in advance conventional map data. Thanks to the above-described layered structure of the data recording section 6, the field work data obtained by a farm work machine during its work traveling in the field can be associated with a map position in the field, i.e. a coordinate position. Therefore, by utilizing such field work data associated with the coordinate position by a data management section 60, an evaluation section 70 can effect farming evaluation of the field in the unit of subdivisions thereof and in the unit of work machine type, also.

In the case of the example shown in Fig. 1, as examples of the farm work machine 1, there are used a tractor 1T for effecting a cultivation preparation work e.g. a land-leveling work such as a puddling work of the field, a rice planting/seeding machine 1P for effecting seedling as a cultivation starting work, and a combine 1C for effecting a grain harvesting work as a cultivation finishing work. These work machines respectively mount a self-position detecting device by e.g. GPS and can provide traveling positions thereof into data. Various kinds of data generated by the farm work machines 1 can be forwarded to the data recording section 6 of the computer system via a wireless transmitter, a portable memory device, etc.

In case the tractor 1T enters a field and travels around an outermost circumference of the field, round-traveling position data indicating its traveling route will be generated as a part of farm work data and recorded as such via the data management section 60 in the machine-type-specific data layer of the data recording section 6. Moreover, the data management section 60 applies such round-traveling position data to the above-described conventional map data, thus generating a field contour data (an example of "field map data") indicating the contour of the field as the subject of farm work contemplated and records this data in the field map data layer as contour map data of this field.

Further, in case the tractor 1T is provided with a height (altitude) detecting function, height data can be generated as a part of the field work data. If this height data is associated with the coordinate position in the field map layer, a slope of the field is calculated. With this, the slope data of the field (one example of "field map data") can be recorded in the field map layer. Further, a work implement such as a rotary implement mounted on the tractor is subjected to a horizontal (rolling) control. Thus, from control data of such horizontal control too, the slope data of the field can be calculated.

From a traveling route taken at the time of work traveling of the rice planting machine 1P and implement operational data of a seedling planter, a seedling planting position, as an example of "crop planting position data", can be recorded in the machine-type-specific field work layer of the rice planting machine 1P In the case of a seedling planting work, if a fertilization work is also effected, a fertilizing position too can be recorded in the machine-type-specific field work layer of the rice planting machine 1P. Further, since the rice planting machine 1P is to travel through all parts of the entire field accurately, from the traveling route data in this travel, generation and correction of the field contour data of the field can be effected.

The combine 1C used herein has a function of allowing real-time measurement of a crop harvest amount (yield). Therefore, from the traveling route taken by the combine 1C at the time of its work traveling and yields determined in the course of the work traveling, the data management section 60 can generate unit traveling yield data associating each traveling position with a yield at that position. And, this unit traveling yield data is recorded as one of field work data in the machine-type-specific field work layer of the combine 1C. And, the recorded unit traveling yield data is associated with the field map data via the coordinate position. Thus, from a yield of a subdivision of the field, the evaluation section 70 can output a subdivision yield distribution of the field. Thus, good subdivisions providing better yields than the average and poor subdivisions providing worse yields than the average can be determined from the subdivision yield distribution of the field. With this arrangement, the farm work plan calculation section 7 can generate and output fine detailed farm work plan information, such as decrease in the amount of fertilizer to be introduced to the good subdivisions, an increase in the amount of fertilizer to be introduced to the poor subdivisions, etc.

Moreover, the farm work plan calculation section 7 generates the farm work plan information based on the data recorded in the data recording section 6 and the evaluation information outputted from the evaluation section 70. Preferably, the farm work plan information is provided in the form of a guidance for guiding a farm work to a farmer or farming entity as a "user". Specific modes of such farm work plan information include various formats such as a format similar to a work day schedule, a format similar to a work list listing work items, a format that shows comparison with a past or conventional farm work, a format using icons, or any appropriate combination of these formats. Examples of specific contents of the farm work plan information serving as a guidance are listed below.
(1) a work traveling route of a tractor in a farm work period unit (e.g. yearly) is evaluated and an optimal cultivating direction is proposed;
(2) an introducing timing or introducing hour of a day of a farm work machine is proposed based on actual work hours of a farm work machine in each field;
(3) a standby position of a grain transporting vehicle is proposed from a work traveling route and an expected yield of a combine;
(4) a water feeding/draining plan for a paddy rice field is proposed with reference to slope data of the field; and
(5) a work traveling route (a pattern of harvesting row) of a combine that determines a harvesting row is proposed in consideration to a work traveling route (a pattern of harvesting row) of a rice planting machine that determines a planting row.

In the example shown in Fig. 1, the information to be recorded in the data recording section 6 are sent from the various farm work machines 1 via the data management section 60. Needless to say, information from a machine other than the farm work machines 1 too can be recorded in the data recording section 6. For instance, image information or environment observation information obtained by a remotely controlled or self-controlled quadcopter or a multicopter referred to as "drones" can also be recorded in the data recording section 6. From such image information, through image processing, there can be generated growth data indicating growth conditions of crop in each subdivision of the field. The environment observation information such as climate will become information which will be useful in forecasting a fertilization timing, a harvesting timing, etc. Further, if information of different regions are to be compared with each other, with normalization of e.g. environmental condition with using the environment observation information, improvement in comparison accuracy can be expected.

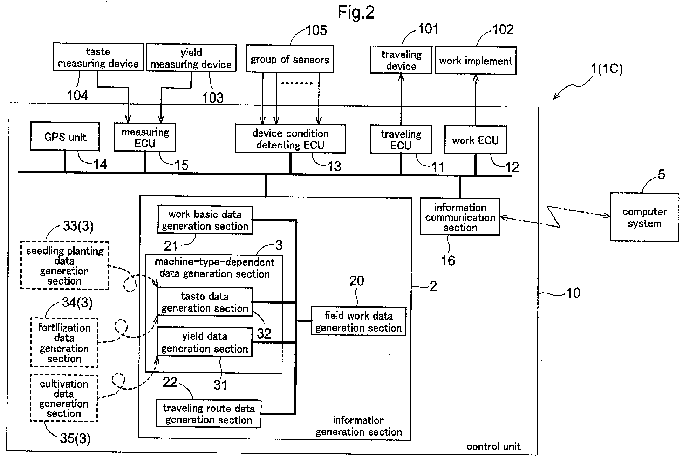

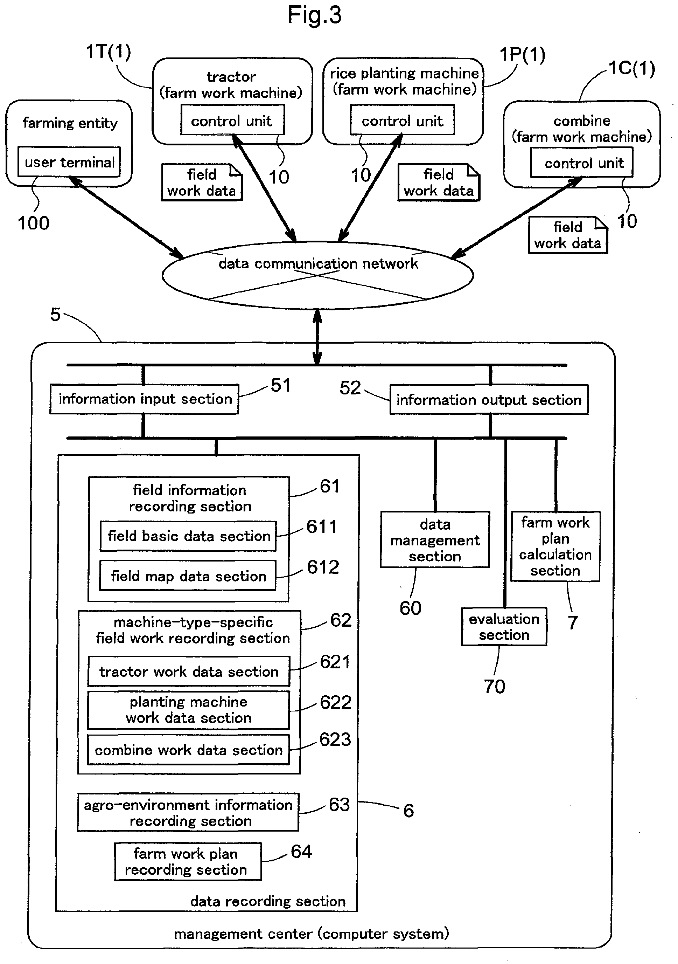

One specific embodiment of the agricultural field management system according to the present invention will now be explained with reference to Fig. 2 and Fig. 3. The agricultural field management system in this embodiment too adopts the data recording structure (layered structure) in the data recording section 6 and the contents of data processing in the data management section 60 described above with reference to Fig. 1. This agricultural field management system has, as its core constituting element, a computer system 5 of the server-client type or cloud computing type for shared use by a plurality of registered farming entities. From farm work machines effecting various farm works in the fields of the respective farming entities, various kinds of data as field work data for each machine type are sent to the computer system 5. Each farming entity, by using a terminal device of its own, can receive farm work plan information sent from the computer system 5.

Fig. 2 is a functional block diagram showing functional sections relating to this invention and configured in a control unit 10 of the combine 1C as one example of the farm work machine 1 introduced in this agricultural field management system. This combine 1C includes a crawler type traveling device 101, work implements 102 such as a harvesting unit, a threshing unit, etc., a yield measuring device 103 that measures a yield of harvested crop grains at the time of harvest, a taste measuring device 104 for measuring taste of grains at the time of harvest, and a group of sensors 105 for detecting conditions of various devices of the combine.

The control unit 10 includes a traveling ECU 11 for controlling the traveling device 101, a work ECU 12 for controlling the work implements 102, a device condition detecting ECU 13 for processing detection signals from the group of sensors 105, a GPS unit for detecting a self-machine position, a measuring ECU 15 for processing measurement signals from the yield measuring device 103 and the taste measuring device 104. The control unit 10 further includes an information generation section 2 and an information communication section 16 for transmitting field work data to the computer system 5. The work ECU 12, the device condition detecting ECU 13, the GPS unit 14, the measuring ECU 15, the information generation section 2 and the information communication section 16 are connected to each other via a vehicle-mounted LAN or any other data transmission line.

The information generation section 2 includes a work basic data generation section 21, a traveling route data generation section 22, a machine-type-dependent data generation section 3, and a field work data generation section 20. The work basic data generation section 21 generates basic information of a farm work implemented, such as a work content, a work date, a field ID of the worked field, a fuel consumption, etc. The traveling route data generation section 22 chronologically processes self-machine position (positioning data) obtained from the GPS unit 14 and generates traveling route data indicating a traveling route at the time of the work. The machine-type-dependent data generation section 3 generates data depending on the type of the farm work machine 1. For instance, in the case of this combine 1C, the machine-type-dependent data generation section 3 includes a yield data generation section 31 for generating yield data indicating yield associated with a self-machine position based on data from the measuring ECU 15, a taste data generation section 32 for generating taste data indicating taste associated with the self-machine position based on the data from the measuring ECU 15, and so on.

The field work data generation section 20 generates field work data by combining data generated by the work basic data generation section 21, the traveling route data generation section 22, the machine-type-dependent data generation section 3, etc. The generated field work data will be transmitted to the computer system 5 via the information communication section 16.

Fig. 2 shows the functional block diagram using the combine 1C as an example of the farm work machine 1. However, basic contents will remain same or similar in the case of other types of work machines, such as the rice planting machine 1P or the tractor 1T. The major differing functional section, as indicated by dotted line in Fig. 2, is the machine-type-dependent data generation section 3. In case the farm work machine 1 is a rice planting machine 1P, the machine-type-dependent data generation section 3 will be formed as a seedling planting data generation section 33 and a fertilization data generation section 34. The seedling planting data generation section 33 generates data relating to a seedling planting amount, a seedling planting depth as well as data relating to an intrarow spacing and a ridge spacing, in a seedling planting work. The fertilization data generation section 34 generates data relating to fertilization amounts (fertilization distribution) associated with self-machine positions. In case the farm work machine 1 is a tractor 1T mounting a cultivating device, the machine-type-dependent data generation section 3 will be formed as a cultivation data generation section 35. The cultivation data generation section 35 generates data such as a cultivation depth or a horizontal control amount of the cultivating device in association with the self-machine position.

Fig. 3 shows functional blocks of the computer system 5 used in this agricultural field management system. This computer system 5 receives field work data for each machine type from the control units 10 of the tractor 1T, the rice planting machine 1P and the combine 1C as the farm work machines 1, and transmits farm work plan information to user terminals (personal computers, tablet computers, smart phones, etc.) 100 owned by farming entities, i.e. farmers or farm work engaged entities.

The computer system 5 includes basically an information input section 51, an information output section 52, the data recording section 6, the data management section 60, the evaluation section 70 and the farm work plan calculation section 7. The information input section 51 forwards the field work data sent from the farm work machines 1 into the system. The information output section 52 sends the farm work plan information generated within the system to the user terminal 100. Then, a farming entity will formulate an actual farm work plan based on the sent farm work plan information.

The data recording section 6 comprises a database configured as a layered structure including a field information recording section 61 functioning as a "map data recording section", a machine-type-specific field work recording section 62 functioning as a "field work data recording section", an agro-environment information recording section 63, and a farm work plan recording section 64. The field information recording section 61 is divided into a field basic data section 611 and a field map data section 612. The field basic data section 611 records attribute data of field such as a field name, a field owner, etc. The field map data section 612 records field map data integrating maps of fields of farming entities participating in this agricultural field management system in standard map data, so that the contour of each field can be specified by map coordinates. An arbitrarily chosen position within the field can be defined by the map coordinates.

In this embodiment, the machine-type-specific field work recording section 62 functioning as a "field work data recording section" is divided into a tractor work data section 621 for recording field work data of the tractor 1T, a planting machine work data section 622 for recording field work data of the rice planting machine 1P and a combine work data section 623 for recording field work data of the combine 1C. The structure for recording the field work data of the respective farm work machines 1 in such machine-type-specific field work recording section 62 is configured as a layered structure based on the field maps. For instance, tractor self-machine position data recorded in the tractor work data section 621 are a group of self-machine position data recorded in the order of traveling thereof (in the order of time) at the coordinates of the field map. From such data, a traveling route can be extracted directly. Further, by processing the self-machine position data indicating a travel route when the tractor 1T has traveled around the outer circumference of the field (this can be either an around work traveling or an around non-work traveling), the contour of the field can be extracted. And, such field contour data will be recorded in the field map data section 612. Further, in case the tractor 1T includes a measuring instrument capable of measuring an altitude (field height), it is possible to record the height of the field position at a self-machine position during traveling. And, from such height data, the data management section 60 can generate contour lines of the field, consequently, slope data, and this generated slope data too can be recorded in the field map data section 612.

The self-machine position data indicating a traveling route of the rice planting machine 1P recorded in the planting machine work data section 622 can be associated with a planting position of crop also. With recording such crop planting position, for instance, the planting position can be readily associated with a seedling planting amount, whereby evaluation of seedling planting amount distribution in the field is made possible.

Further, the self-machine position data recorded in the combine work data section 623 representing traveling route of the combine 1C can be associated with the yield data measured in real time during harvesting. In this way, from the yield data associated with the self-vehicle position data (coordinate position on the field map), a unit yield, e.g. a yield per subdivision, can be readily extracted.

The machine-type-specific field work recording section 62 employs, based on the field maps, a field work layer structure recording field work data of various machine types with using coordinate positions common to the field maps. Therefore, distribution of work conditions or work results by a particular farm work machine 1 in a particular field can be readily extracted and its farming evaluation is made possible. Further, if such field work layer is configured for each growth period or each year, chronological variations in the distribution of the work conditions or work results by a particular farm work machine in a particular field can be readily extracted also and can be utilized for farming evaluation. Application programs for enabling such various farming evaluations are incorporated in the evaluation section 70.

The farm work plan calculation section 7, in response to e.g. a request from each farming entity, compares the farming evaluation data indicating farming evaluation by the evaluation section 70 with past data or reference data corresponding thereto and generates farm work plan information including the result of such comparison. Preferably, the farm work plan information includes implemented crop species, implemented farm work period, farm work machine to be introduced. And, such generated farm work plan information will be transmitted to the user terminal 100 via the information output section 52 and on this user terminal 100, the information will be visualized via a monitor display or a printout. Then, viewing this visualized farm work plan information, the subject farming entity will formulate a final farm work plan.

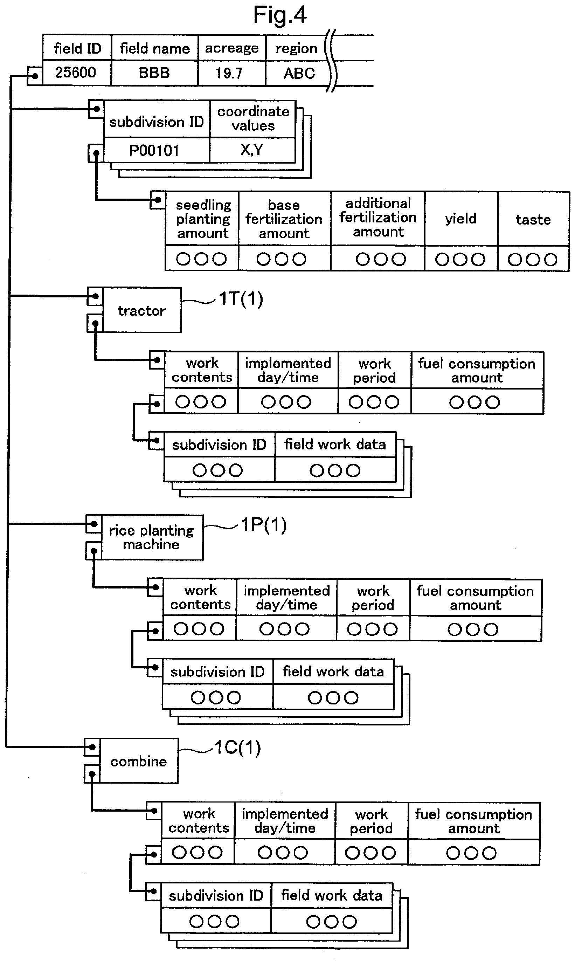

Next, an example of specific farm work plan information will be explained with reference to Fig. 4. Fig. 4 schematically shows farm work plan information as past performance that a particular farming entity has received for formulating a farm work plan in a field having a field ID: "25600" by making access to the computer system 5.

The farm work plan information includes, as field basic information, an "field ID", "field name", "acreage (area)", "region", etc. Further, the "field ID" is linked with information of many subdivisions obtained by dividing the field. This subdivision information includes a "subdivision ID" and "coordinate values". Thus, the "subdivision ID" is linked with field work data generated by the farm work machine 1 and assigned to a particular subdivision. This field work data includes "seedling planting amount", "base fertilization amount", "additional fertilization amount", "yield", "taste", etc.

Further, the "field ID" is linked with the field work data specific to farm work machine types, in this case, the field work data of the tractor 1T, the rice planting machine1P and the combine 1C. This field work data includes "work contents", "implemented day/time", "work period", "fuel consumption amount", etc. Then, the subject farming entity will formulate a farm work plan for a next farm work to be effected by referring to the farm work plan information sent to the user terminal 100 and having the contents described above.

### [Other Embodiments]

(1) In the foregoing embodiment, as the farm work machines 1, the tractor 1T, the rice planting machine 1P and the combine 1C were used. Alternatively, any other farm work machine 1 can be added or only one or two of the tractor 1T, the rice planting machine 1P and the combine 1C can be used instead. The work assignments for the respective farm work machines are not limited to those described above. For instance, by mounting a seeding implement (a seeder) to the tractor 1T, this tractor 1T can generate planting position information, so the planting position information can be received from this tractor 1T.
(2) In the foregoing embodiment, the computer system 5 was commonly used by a plurality of farming entities. However, it can also be a "stand-alone" type computer system 5 for use by a single farming entity or a single field only. In particular, in case the subject system is used by a single farming entity, a personal computer, a tablet computer or a smart phone will be suitable as the computer system 5.
(3) In the foregoing embodiment, the computer system 5 was installed at one location only. Instead, such computer systems 5 can be installed at a plurality of locations, so that each computer system 5 can be accessed from a user terminal 100 for transmitting field work data for respective farm work machine and so that the user terminal 100 can obtain farm work plan information individually.

### INDUSTRIAL APPLICATION

The agricultural field management system according to the present invention can be applied not only to crop cultivation such as rice cultivation, wheat cultivation, but also to vegetable cultivation or fruit cultivation.

### DESCRIPTION OF REFERENCE MARKS/NUMERALS

1: farm work machine
1C: combine
1P: rice planting machine
1T: tractor
2: information generation section
3: machine-type-dependent data generation section
5: computer system
6: data recording section
7: farm work plan calculation section
10: control unit
11: traveling ECU
12: work ECU
13: device condition detecting ECU
14: GPS unit
15: measuring ECU
16: information communication section
20: field work data generation section
21: work basic data generation section
22: traveling route data generation section
31: yield data generation section
32: taste data generation section
33: seedling planting data generation section
34: fertilization data generation section
35: cultivation data generation section
51: information input section
52: information output section
60: data management section
61: field information recording section (map data recording section)
62: machine-type-specific field work recording section (field work data recording section)
63: agro-environment information recording section
64: farm work plan recording section
70: evaluation section
100: user terminal
101: traveling device
102: work implement
103: yield measuring device
104: taste measuring device
105: group of sensors
611: field basic data section
612: field map data section
621: tractor work data section
622: planting machine work data section
623: combine work data section

## Claims

1. An agricultural field management system comprising
a map data recording section having a field map layer for recording field map data;
a field work data recording section having a machine-type-specific field work layer for recording field work data generated for each work implemented by various kinds of farm work machine on the field;
a data management section for executing data management on the field map data and the field work data at a common coordinate position; and
an evaluation section for effecting farming evaluation of the field based on the field work data.

2. The agricultural field management system of claim 1, wherein the field work data contains a traveling route of the farm work machine and this traveling route is associated with the coordinate position in the field map layer.

3. The agricultural field management system of claim 1 or 2, wherein:
in the map data recording section, height data of the field at the coordinate position can be recorded in the field map layer; and
the data management section generates slope data of the field from the height data.

4. The agricultural field management system of claim 3, wherein the height data is generated from machine operational data of the farm work machine.

5. The agricultural field management system of any one of claims 1-4, wherein the farm work machine include a tractor, a rice planting machine or a seeding machine, and a harvesting machine.

6. The agricultural field management system of claim 5, wherein contour data of the field is generated based on a traveling route contained in the field work data generated by traveling of the tractor around/along the outer circumference of the field.

7. The agricultural field management system of claim 5 or 6, wherein crop planting position data generated by a work traveling of the rice planting machine or the seeding machine is included in the field work data and the crop planting position data is associated with the field via the coordinate position.

8. The agricultural field management system of any one of claims 5-7, wherein:
unit traveling yield data generated in association with a traveling position when the harvesting machine effects harvesting work traveling;
the unit traveling yield data is associated with the field via the coordinate position; and
a yield per subdivision of the field is calculated.

9. The agricultural field management system of any one of claims 1-8, further comprising a farm work plan calculation section for deriving farm work plan information of the field based on the farming evaluation by the evaluation section.

10. The agricultural field management system of claim 9, wherein the farm work plan information includes an implemented crop species, an implemented farm work timing, and a farm work machine(s) to be introduced.
